# EUROPÄISCHE PATENTSCHRIFT

(11) **EP 3 424 334 B1**
(45) Veröffentlichungstag und Bekanntmachung des Hinweises auf die Patenterteilung: **21.04.2021**
(21) Anmeldenummer: 18181286.8
(22) Anmeldetag: 02.07.2018
(51) Int. Cl.: A22C 17/00, B65H 35/08, B65H 16/02, B65H 16/10, B26D 7/32

(54) **BEREITSTELLEN VON BAHNFÖRMIGEM ZWISCHENBLATTMATERIAL AN EINEM SCHNEIDBEREICH**
PROVISION OF WEB-SHAPED SHEET MATERIAL TO A CUTTING AREA
FOURNITURE DE MATÉRIAU DE FEUILLE INTERMÉDIAIRE EN FORME DE BANDE À UNE ZONE DE COUPE

(30) Priorität: 03.07.2017 DE 102017114763; 18.08.2017 DE 102017118927
(43) Veröffentlichungstag der Anmeldung: 09.01.2019
(60) Teilanmeldung: 21154164.4
(73) Patentinhaber: Weber Maschinenbau GmbH Breidenbach, 35236 Breidenbach (DE)
(72) Erfinder: Einloft-Velte, Tobias, 35232 Dautphetal (DE); Nispel, Thomas, 35232 Dautphetal (DE); Ritzen, Noël, 57074 Siegen (DE)
(74) Vertreter: Manitz Finsterwald Patent- und Rechtsanwaltspartnerschaft mbB

(56) Entgegenhaltungen:
- EP-A1- 2 942 166
- EP-A2- 0 251 337
- DE-A1-102013 204 956

## Beschreibung

Die Erfindung betrifft eine Vorrichtung zum Bereitstellen von bahnförmigem Zwischenblattmaterial an einem Schneidbereich, in welchem zugeführte Produkte in Scheiben geschnitten und Zwischenblätter eingebracht werden, die im Schneidbereich von dem bereitgestellten Zwischenblattmaterial abgetrennt werden.

Im Schneidbereich können folglich von den Produkten abgetrennte Scheiben mit den in den Schneidbereich eingebrachten Zwischenblättern versehen werden. Dabei können z.B. entweder Zwischenblätter jeweils zwischen zwei unmittelbar aufeinanderfolgende Scheiben eingebracht oder Zwischenblätter jeweils unter eine Scheibe und somit zwischen diese Scheibe und eine Auflagefläche dieser Scheibe eingebracht werden. Bei der Bildung von Portionen aus mehreren Scheiben beispielsweise befindet sich dann jeweils ein Zwischenblatt unter der untersten Scheibe einer Portion. Eine solche Funktion, die auch als Underleaver-Funktion bezeichnet wird, schließt aber nicht aus, dass bei der Bildung von Portionen jeweils ein Zwischenblatt nicht nur unter der untersten Scheibe liegt, sondern ein oder mehrere Zwischenblätter auch innerhalb der Portion jeweils zwischen zwei aufeinanderfolgende Scheiben eingebracht werden. Unabhängig davon, ob eine Underleaver-Funktion vorgesehen ist oder nicht, kann generell innerhalb einer Portion entweder zwischen jedem Paar unmittelbar aufeinanderfolgender Scheiben oder nur zwischen einem oder mehreren Paaren unmittelbar aufeinanderfolgender Scheiben jeweils ein Zwischenblatt eingebracht werden, z.B. zwischen jedem n-ten Paar, wobei n > 1.

Derartige Vorrichtungen sind auf dem Gebiet des Aufschneidens von Lebensmittelprodukten grundsätzlich bekannt und werden auch als Interleaver bzw. Underleaver bezeichnet. EP 0 251 337 A2 offenbart eine Vorrichtung gemäß dem Oberbegriff des Anspruchs 1. Dabei kann - wie vorstehend erwähnt - ein Interleaver auch eine Underleaver-Funktion ausüben, und umgekehrt. Die vorliegende Offenbarung gilt also nicht nur für die hier in erster Linie erläuterten Interleaver bzw. das Bereitstellen von Zwischenblättern bzw. Zwischenblattmaterial jeweils zwischen zwei unmittelbar aufeinander folgenden Scheiben, sondern auch für sogenannte "Underleaver", die dazu dienen, Produkten ein Blatt unterzulegen. Mit einer derartigen Unterblattzuführung wird dafür gesorgt, dass die Produkte zumindest nicht mit ihrer gesamten Unterseite unmittelbar auf einer Auflagefläche, beispielsweise einer Fördereinrichtung, aufliegen. Wenn im Folgenden jeweils lediglich der Begriff "Interleaver" verwendet wird, dann gelten die jeweiligen Ausführungen und gilt die jeweilige Offenbarung - soweit sinnvoll - auch für einen "Underleaver". Wie bereits erwähnt, kann ein und dieselbe Vorrichtung zum Bereitstellen von Zwischenblattmaterial bzw. von Zwischenblättern in Abhängigkeit von der jeweiligen Anwendung sowohl eine Interleaver-Funktion als auch eine Underleaver-Funktion ausüben, d.h. ein Interleaver ist im Rahmen dieser Offenbarung gleichzeitig auch ein Underleaver, und umgekehrt.

Die Erfindung betrifft außerdem eine Vorrichtung zum Aufschneiden von Lebensmittelprodukten mit einer Produktzufuhr, die aufzuschneidende Produkte einem Schneidbereich zuführt, in welchem sich ein Schneidmesser rotierend und/oder umlaufend bewegt, um die zugeführten Produkte in Scheiben zu schneiden, und mit einem erfindungsgemäßen Inter- bzw. Underleaver.

Derartige Schneidevorrichtungen werden auch als Slicer oder Hochgeschwindigkeitsslicer bezeichnet, letzteres vor dem Hintergrund, dass mit derartigen Maschinen z.B. stangen- oder laibförmige Lebensmittelprodukte mit hohen Schneidgeschwindigkeiten von mehreren hundert bis einigen tausend Scheiben pro Minute aufgeschnitten werden können. In vielen Anwendungen werden aus den abgetrennten, auf eine z.B. von einem Portionierband gebildete Ablagefläche fallenden Scheiben beispielsweise gestapelte oder geschindelte Portionen gebildet. Ein Interleaver dient beispielsweise dazu, zwischen unmittelbar aufeinanderfolgende Scheiben einer Portion Zwischenblätter einzubringen, damit die Scheiben später leichter voneinander getrennt werden können. Als Material für die Zwischenblätter dient beispielsweise Papier oder eine Kunststofffolie.

Entsprechend dem Fortschritt bei der Entwicklung von Schneidemaschinen, insbesondere hinsichtlich Geschwindigkeit, Genauigkeit und Vielseitigkeit, werden auch an die Inter- bzw. Underleaver immer höhere Anforderungen gestellt. Bekannte Inter- bzw. Underleaver-Konzepte, die grundsätzlich zufriedenstellende Ergebnisse liefern, genügen diesen erhöhten Anforderungen häufig nicht mehr.

Es besteht folglich Bedarf an einer verbesserten Interleaver- bzw. Underleaver-Technologie insbesondere auf dem Gebiet des Aufschneidens von Lebensmittelprodukten mittels Hochgeschwindigkeitsslicern. Besonders der mehrspurige und spurindividuelle Interleaver- und Underleaver-Betrieb steht immer mehr im Vordergrund.

Die hohen Schneidgeschwindigkeiten insbesondere bei modernen Lebensmittelslicern erfordern eine entsprechend hohe Leistungsfähigkeit der Inter- bzw. Underleaver beim Ausstoßen der Materialbahn in den Schneidbereich. Dies stellt eine besondere Herausforderung vor allem dann dar, wenn der Schneidprozess mehrspurig erfolgt und spurindividuell steuerbar ist, da diese Leistungsmerkmale auch bei dem Interleaver vorhanden sein müssen, um einen vollständig spurindividuellen Betrieb bieten zu können.

Aufgabe der Erfindung ist es, eine Vorrichtung zum Bereitstellen von bahnförmigem Zwischenblattmaterial dahingehend zu verbessern, dass das Zwischenblattmaterial auch bei hohen Schneidgeschwindigkeiten und insbesondere im Fall eines mehrspurigen, spurindividuell steuerbaren Schneidbetriebs zuverlässig möglich ist.

Die Lösung dieser Aufgabe erfolgt durch die Merkmale des Anspruchs 1.

Erfindungsgemäß umfasst die Vorrichtung eine Ausgabeeinrichtung, die zum Ausstoßen wenigstens einer Materialbahn in den Schneidbereich ausgebildet ist, wobei die Ausgabeeinrichtung zumindest eine angetriebene Vorschubwalze und wenigstens eine Gegeneinheit umfasst, die zusammen mit der Vorschubwalze einen Vorschubspalt für die Materialbahn bildet.

Gemäß einem Ausführungsbeispiel ist die Vorschubwalze in eine Vorschubeinheit der Ausgabeeinrichtung integriert und über einen Antriebsriemen mit einem außerhalb der Vorschubeinheit angeordneten Antriebsmotor für die Vorschubwalze gekoppelt, wobei der Antriebsriemen durch Bewegen der Vorschubeinheit gespannt und gelöst werden kann.

Montage und Demontage werden durch eine solche bewegbare Vorschubeinheit erheblich vereinfacht.

Die Vorschubeinheit kann lösbar befestigbar sein. Insbesondere kann die Vorschubeinheit entnehmbar und wieder einsetzbar sein. Bevorzugt ist vorgesehen, dass bei der Montage die Gegeneinheit ohne die Vorschubeinheit montierbar ist, woraufhin die Vorschubeinheit mit der Gegeneinheit koppelbar ist, wobei für die Demontage umgekehrt zunächst die Vorschubeinheit von der Gegeneinheit entnehmbar und dann die Gegeneinheit abnehmbar ist.

Insbsondere kann die Vorschubeinheit verschwenkbar sein. Dabei kann die Vorschubeinheit beispielsweise verschwenkbar mit der Gegeneinheit koppelbar sein.

Die Ausgabeeinrichtung wird erfindungsgemäß zu einem mehrspurigen Ausstoßen von Materialbahnen ausgebildet sein und für jede Spur eine angetriebene Vorschubwalze umfassen.

Insbesondere ist vorgesehen, dass durch eine interne oder externe Steuereinrichtung die Ausgabeeinrichtung durch spurindividuelles Betreiben der einzelnen Vorschubwalzen steuerbar ist.

Ein in konstruktiver Hinsicht vergleichsweise einfaches Antriebskonzept ergibt sich erfindungsgemäß, wenn die Vorschubwalzen der einzelnen Spuren paar- oder gruppenweise zusammengefasst sind und für jedes Paar bzw. jede Gruppe ein Koaxialwellenantrieb mit mehreren koaxial ineinanderliegenden Antriebswellen vorgesehen ist, die jeweils einer der Vorschubwalzen zugeordnet sind.

Für jede Antriebswelle kann ein Riemenantrieb mit einem versetzt zur Antriebswelle angeordneten Antriebsmotor vorgesehen sein. Bei einem solchen Antriebskonzept kann der zur Verfügung stehende, in der Praxis meist knappe Bauraum optimal genutzt werden.

Es können zwei Paare bzw. Gruppen von Vorschubwalzen vorgesehen sein, die von gegenüberliegenden Seiten aus antreibbar sind.

Insbesondere dann, wenn ausreichend Bauraum zur Verfügung steht, können die Antriebswellen, bevorzugt jeweils in Form einer Hohlwelle, alternativ seitlich mittels einer Kupplung, die vorzugsweise als Doppelkupplung ausgebildet ist, in axialer Verlängerung der Vorschubwalzen durch ein Gehäuse der Vorschubeinheit geführt sein.

Montage und Demontage der Ausgabeeinrichtung können weiter vereinfacht werden, wenn gemäß einem weiteren Ausführungsbeispiel die Ausgabeeinrichtung eine stationäre Aufnahme umfasst, an der zumindest die Gegeneinheit und eine Vorschubeinheit in einer einzigen vorgegebenen Reihenfolge, insbesondere werkzeuglos, montierbar sind.

Bevorzugt ist an der Aufnahme zusätzlich eine Schneidkante, insbesondere werkzeuglos, montierbar, wobei die Gegeneinheit, die Vorschubeinheit und die Schneidkante in einer einzigen vorgegebenen Reihenfolge an der Aufnahme montierbar sind.

Hierdurch bilden die Vorschubeinheit und die Gegeneinheit einerseits sowie die Schneidkante andererseits, also die drei Komponenten Gegeneinheit, Vorschubeinheit und Schneidkante, zusammen eine kompakte, gemeinsam montierbare und demontierbare Baueinheit.

Für zumindest eine der Komponenten Gegeneinheit und Vorschubeinheit, bevorzugt zusätzlich für die Schneidkante, kann eine Spanneinrichtung zur endgültigen Positionierung und/oder Sicherung an der Aufnahme vorgesehen sein. Insbesondere ist diese Spanneinrichtung für die zuletzt zu montierende Komponente vorgesehen. Bei der zuletzt zu montierenden Komponente handelt es sich bevorzugt um die Schneidkante, und zwar unter anderem deshalb, da die Schneidkante unmittelbar mit dem Schneidmesser zusammenwirkt.

Das Vorhandensein, die korrekte endgültige Positionierung und/oder der korrekte Typ zumindest einer der Komponenten Gegeneinheit und Vorschubeinheit, bevorzugt zusätzlich Schneidkante, kann durch eine interne oder externe Steuereinrichtung automatisch erkennbar sein, insbesondere mittels der vorstehend erwähnten oder einer anderen Spanneinrichtung.

Das Zusammenspiel von Vorschubeinheit, Gegeneinheit und Schneidkante kann folglich nicht nur die Montage und die Demontage erleichtern, sondern ermöglicht zudem eine automatische Erkennung des bestimmungsgemäßen Montagezustands.

Bevorzugt ist vorgesehen, dass eine früher zu montierende Komponente durch eine später zu montierende Komponente endgültig positionierbar und/oder sicherbar ist.

Gemäß einer bevorzugten Weiterbildung ist die Ausgabeeinrichtung dazu ausgebildet, zur Beeinflussung der ausgestoßenen Materialbahn eine Druckluftströmung zu erzeugen. Mit einer solchen Luftströmung ist es möglich, den vorderen Endabschnitt der Materialbahn im Schneidbereich in einer jeweils gewünschten Weise zu beeinflussen.

Vorzugsweise ist die Druckluftströmung zeitlich und/oder räumlich variierbar. Insbesondere kann die Druckluftströmung über die Breite der Materialbahn variierbar sein.

Vorzugsweise ist vorgesehen, dass die Druckluftströmung jeweils innerhalb eines einem Zwischenblatt entsprechenden Zeitfensters variierbar ist.

Gemäß einer bevorzugten Ausführungsform ist die Ausgabeeinrichtung zu einem mehrspurigen Ausstoßen von Materialbahnen ausgebildet, wobei die Druckluftströmung spurindividuell steuerbar ist.

Zum Steuern der Druckluftströmung kann eine Stelleinrichtung vorgesehen sein, wobei bevorzugt die Stelleinrichtung an einem Druckluftauslass der Ausgabeeinrichtung wirksam ist.

Es kann vorgesehen sein, dass die Druckluftströmung in Abhängigkeit von einer jeweiligen Anwendung konfigurierbar ist. Dies kann automatisch erfolgen, insbesondere über ein jeweils an einer internen oder externen Steuereinrichtung ausgewähltes Programm. Alternativ kann eine manuelle Konfiguration vorgesehen sein, insbesondere an einer internen oder externen Bedieneinheit.

Gemäß einem weiteren Ausführungsbeispiel kann eine interne oder externe Steuereinrichtung vorgesehen sein, die dazu ausgebildet ist, das Ausstoßen der Materialbahn und das Erzeugen der Druckluftströmung zu koordinieren.

Eine für einen Mehrspurbetrieb geeignete Ausgabeeinrichtung mit einem besonders kompakten Aufbau und mit integrierter Gegeneinheit lässt sich realisieren, wenn gemäß einem weiteren Ausführungsbeispiel die Ausgabeeinrichtung zu einem mehrspurigen Ausstoßen von Materialbahnen ausgebildet und für jede Spur der Vorschubspalt von einem Paar aus einer angetriebenen Vorschubwalze und einer Andrückeinheit gebildet ist, wobei jeweils die Vorschubwalze des einen Paares und die Andrückeinheit eines unmittelbar benachbarten Paares als eine Zweispureinheit gemeinsam um eine gemeinsame Achse drehbar antreibbar und die Andrückeinheiten jeweils mit einer Freilauffunktion versehen sind.

Um eine Ausgabeeinrichtung mit einer geraden Anzahl von mehr als zwei Spuren zu realisieren, können gemäß einer Weiterbildung mehrere Zweispureinheiten nebeneinander vorgesehen und jeweils die Andrückeinheit der einen Zweispureinheit und die Vorschubwalze einer unmittelbar benachbarten Zweispureinheit zumindest in radialer Richtung aneinander abgestützt und gegeneinander verdrehbar sein.

Wenn ein mehrspuriger Slicer mit einem erfindungsgemäßen Interleaver bzw. Underleaver versehen ist, dann ist vorzugsweise eine gemeinsame Steuereinrichtung vorgesehen, die dazu ausgebildet ist, das Aufschneiden der Produkte und das Bereitstellen des Zwischenblattmaterials spurindividuell zu koordinieren.

Die Erfindung wird im Folgenden beispielhaft unter Bezugnahme auf die Zeichnung beschrieben. Es zeigen:
- Fig. 1: schematisch eine Seitenansicht eines Slicers mit einem Interleaver gemäß einem Ausführungsbeispiel der Erfindung sowie drei schematisierte Einzeldarstellungen,
- Fig. 2 - 4: jeweils schematisch eine Ausführungsform einer Vorschubeinheit eines Interleavers, und
- Fig. 5a bis 5h: verschiedene Ansichten einer möglichen konkreten Ausgestaltung zur Anbringung von Vorschubeinheit, Gegeneinheit und Schneidkante an einer stationären, an einem Maschinengestell eines Slicers befestigten Aufnahme.

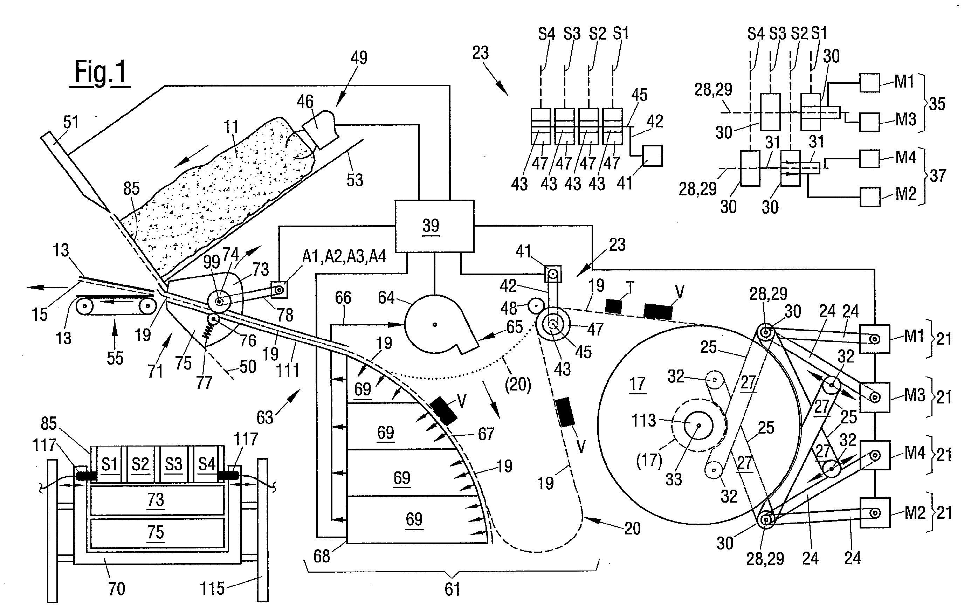

Die große Darstellung in Fig. 1 zeigt in einer schematischen, nicht maßstabsgerechten Seitenansicht einen mehrspurigen Hochgeschwindigkeitsslicer, also eine Vorrichtung zum mehrspurigen Aufschneiden von Lebensmittelprodukten wie beispielsweise Wurst, Fleisch oder Käse.

In dem dargestellten Ausführungsbeispiel wird der Slicer vierspurig betrieben. Auf einer zur Horizontalen geneigten Produktauflage 53 liegen vier aufzuschneidende Produkte 11 nebeneinander. Eine Produktzufuhr 49 umfasst für jede Spur, also für jedes der vier Produkte 11, einen auch als Produktgreifer bezeichneten Produkthalter 46, der das Produkt 11 am hinteren Ende hält und in der durch den Pfeil angedeuteten Zufuhrrichtung einer senkrecht zur Produktauflage 53 verlaufenden Schneidebene 50 zuführt, in der sich ein Schneidmesser 51 bewegt, durch dessen Schneidkante die Schneidebene 50 definiert ist.

Bei dem Schneidmesser 51 kann es sich um ein sogenanntes Sichel- oder Spiralmesser mit einer sichel- oder spiralförmig verlaufenden Schneidkante handeln, welches lediglich um eine nicht dargestellte Messerachse rotiert. Alternativ kann das Schneidmesser 51 ein sogenanntes Kreismesser mit einer kreisförmigen Schneidkante sein, das um eine eigene Messerachse rotiert und zusätzlich um eine parallel versetzt zur Messerachse verlaufende Achse planetarisch umläuft, um die zum Abtrennen von Scheiben 13 von den Produkten 11 erforderliche Schneidbewegung relativ zu den Produkten 11 zu erzeugen.

Die Produktzufuhr 49 ist spurindividuell betreibbar, d.h. die Produkthalter 46 können sich grundsätzlich unabhängig voneinander in der Zufuhrrichtung bewegen und somit die einzelnen Produkte 11 mit unterschiedlichen Geschwindigkeiten und Geschwindigkeitsprofilen der Schneidebene 50 zuführen. Dies gilt auch, wenn als Produktzufuhr 49 anstelle der Produkthalter 46 oder zusätzlich zu den Produkthaltern 46 spurindividuell antreibbare Produktauflagebänder anstelle einer passiven Produktauflage 53 verwendet werden. Hierdurch kann in jeder Spur unabhängig von den jeweils anderen Spuren der Aufschneidevorgang individuell gesteuert werden, insbesondere mit dem Ziel einer gewichtsgenauen Erzeugung von Scheiben 13 bzw. von jeweils aus mehreren Scheiben 13 gebildeten Portionen unter Berücksichtigung der individuellen Produkteigenschaften wie insbesondere Gewichtsverteilung und Querschnittsprofil.

Es ist auch möglich, in einer Spur den Produkthalter 46 anzuhalten oder entgegen der Zufuhrrichtung zu bewegen, um vorübergehend keine Scheiben 13 von dem betreffenden Produkt 11 abzutrennen, während die Produkte 11 in den anderen Spuren weiterhin aufgeschnitten werden. Die spurindividuelle Produktzufuhr 49 kann auch die Schneidbewegung des Schneidmessers 51 berücksichtigen, die sich dadurch auszeichnet, dass pro Schneidbewegung - also pro Umlauf bzw. Rotation des Schneidmessers 51 - zwar von allen Produkten 11 jeweils eine Scheibe 13 abgetrennt wird, dies jedoch nicht exakt zeitgleich erfolgt, sondern aufgrund des eine bestimmte Zeitdauer benötigenden Durchgangs des Schneidmessers 51 durch die Produkte 11 die abgetrennten Scheiben 13 der Produkte 11 zeitlich nacheinander auf die hier von einem sogenannten Portionierband 55 gebildete Ablagefläche fallen.

Für viele Produkte 11, beispielsweise Schinken oder manche Käsesorten, ist es erwünscht, wenn die jeweils aufeinanderliegenden, beispielsweise eine stapelförmige oder geschindelte Portion bildenden Scheiben 13 voneinander getrennt sind, damit sie später vom Verbraucher leichter einzeln aus einer die Portion enthaltenden Verpackung entnommen werden können. Hierzu dienen auf dem Gebiet der Hochgeschwindigkeitsslicer sogenannte Interleaver, also Vorrichtungen zum Bereitstellen von bahnförmigem Zwischenblattmaterial, mit denen es möglich ist, zwischen unmittelbar aufeinanderfolgende Scheiben 13 Zwischenblätter 15 einzubringen.

Interleaver gibt es in unterschiedlichen Ausgestaltungen. Gemäß einer verbreiteten Funktionsweise, die auch für den hier dargestellten erfindungsgemäßen Interleaver vorgesehen ist, werden die endlosen Materialbahnen 19 im Bereich der Schneidebene 50 von unten kommend entsprechend der durch die Schneidbewegung des Schneidmessers 51 vorgegebenen Taktung ausgestoßen. Dies erfolgt derart, dass das vordere Ende der betreffenden Materialbahn 19 vor der Schnittfläche des betreffenden Produktes 11 liegt und zusammen mit der als nächstes abgetrennten Scheibe 13 von der Materialbahn 19 mittels des Schneidmessers 51 abgeschnitten wird und so ein Zwischenblatt 15 bildet. Dieses Zwischenblatt kommt auf dem Portionierband 55 bzw. der zuvor abgetrennten Scheibe 13 und unterhalb derjenigen Scheibe 13 zu liegen, mit der zusammen das Zwischenblatt 15 zuvor abgetrennt wurde.

Der Aufbau und die Funktionsweise derartiger Slicer und auch das Grundprinzip eines Interleavers sind dem Fachmann hinlänglich bekannt, so dass hierauf im Folgenden nicht näher eingegangen zu werden braucht.

Der in den Slicer integrierte erfindungsgemäße Interleaver ist mehrspurig und zu einem durchgehend spurindividuellen Bereitstellen des Zwischenblattmaterials ausgebildet. Nachfolgend werden Aufbau und Funktionsweise des Interleavers am Beispiel eines Vierspurbetriebs erläutert. Durch eine vergleichsweise einfache Umrüstung kann der erfindungsgemäße Interleaver aber auch einspurig, zweispurig oder dreispurig betrieben werden. Die jeweilige Betriebsart ist beispielsweise von den aufzuschneidenden Produkten, den nachgeschalteten Förder- und Sortiereinrichtungen sowie der Verpackungsart bzw. der Verpackungsmaschine abhängig. Generell ist der erfindungsgemäße Interleaver derart konzipiert, dass ein Betrieb mit beliebig vielen Spuren und folglich auch mit mehr als vier Spuren möglich ist.

Für jede der vier Spuren S1, S2, S3 und S4 umfasst das Bereitstellen des Zwischenblattmaterials das Abnehmen des Materials von einem durch eine Materialrolle 17 gebildeten Materialvorrat, das Speichern von Material in einem Schlaufenspeicher 61, das Führen des Materials in einem Bereich zwischen dem Schlaufenspeicher 61 und einer Ausgabeeinrichtung 71 sowie das Ausgeben des Materials mittels der Ausgabeeinrichtung 71.

Für jede Spur umfasst das Abnehmen der Materialbahn 19 von der Materialrolle 17 das Abrollen der Materialbahn 19 mittels eines Abrollantriebs 21 und das Fördern der Materialbahn 19 in den Schlaufenspeicher 61 hinein mittels einer für alle Spuren gemeinsamen Fördereinrichtung 23. Die einzelnen Abrollantriebe 21 und die gemeinsame Fördereinrichtung 23 bilden eine Abnahmeeinrichtung des erfindungsgemäßen Interleavers.

Für jede Spur erfolgt das Speichern der Materialbahn 19 durch die Bildung einer Materialschlaufe 20 im Schlaufenspeicher 61. Im Schlaufenspeicher 61 werden die einzelnen Materialbahnen 19 bzw. Schlaufen 20 durch Trennwände (nicht dargestellt) seitlich geführt, um die Spurtreue der Materialbahnen 19 zu gewährleisten.

Im dargestellten Ausführungsbeispiel wird die gesamte Transportstrecke für die Materialbahn 19 zwischen dem Schlaufenspeicher 61 und der Ausgabeeinrichtung 71 von einem Schacht 111 gebildet, in welchem die einzelnen Materialbahnen 19 geführt werden. Eine solche Ausgestaltung ist in der Praxis zwar möglich. Bevorzugt sind jedoch zwischen dem Schlaufenspeicher 61 und der Ausgabeeinrichtung 71 zusätzlich zu einem reinen Führungsabschnitt, wie er in Fig. 1 durch den Schacht 111 gebildet ist, weitere Einrichtungen vorgesehen, auf die an dieser Stelle nicht näher eingegangen werden soll.

Das Ausgeben der einzelnen Materialbahnen 19 umfasst jeweils das Entnehmen der Materialbahn 19 aus dem Schlaufenspeicher 61 und das Ausstoßen der Materialbahn 19 in den Schneidbereich, also vor die Schnittfläche des betreffenden Produktes 11, wie vorstehend erläutert. Beim Entnehmen wird die Materialbahn 19 aus dem Schlaufenspeicher 61 gezogen. Gleichzeitig wird dabei die Materialbahn 19 in den Schneidbereich vorgeschoben und damit ausgestoßen.

Diese einzelnen Bereiche des erfindungsgemäßen Interleavers, also die Abnahmeeinrichtung mit den einzelnen Abrollantrieben 21 und der gemeinsamen Fördereinrichtung 23, der Schlaufenspeicher 61 sowie die Ausgabeeinrichtung 71 werden im Folgenden näher beschrieben. Sofern nichts anderes erwähnt ist, gilt die jeweilige Beschreibung von Funktion und Aufbau für jede der einzelnen Spuren.

Das Zusammenspiel dieser einzelnen Funktionseinheiten des Interleavers untereinander und auch das Zusammenspiel des Interleavers mit den Funktionseinheiten des Slicers, insbesondere - aber nicht ausschließlich - dem Schneidmesser 51 und der Produktzufuhr 49, wird durch eine Steuereinrichtung 39 gesteuert, bei der es sich um die zentrale Steuereinrichtung des Slicers und somit um eine bezüglich des Interleavers externe Steuereinrichtung handeln kann. Alternativ kann der Interleaver eine interne Steuereinrichtung aufweisen, die mit einer Steuereinrichtung des Slicers zusammenarbeitet.

Des Weiteren kann der Interleaver zusätzlich externe Signale erhalten, z.B. von einem Kamerasystem, welches die mittels des Slicers erzeugten Portionen bzw. die Portionsbildung aus den abgetrennten Scheiben überwacht,

Die Materialrollen 17 der einzelnen Spuren sind um eine von einem gemeinsamen Dorn definierte gemeinsame Drehachse 33 drehbar gelagert. Jede Materialrolle 17 umfasst einen Rollenkern 113, auf dem die Materialbahn 19 aufgewickelt ist. Die Materialrollen 17 sind auf dem Dorn insofern frei drehbar, als der Drehantrieb für die Materialrollen 17 zum Abrollen der Materialbahnen 19 nicht über diesen gemeinsamen Dorn erfolgt.

Stattdessen ist für jede Materialrolle 17 ein eigener Abrollantrieb 21 vorgesehen. Jeder Abrollantrieb 21 umfasst einen um eine Schwenkachse 28 verschwenkbaren Antriebsarm 27. Jeder Antriebsarm 27 umfasst einen nicht dargestellten Träger, an dessen einem Ende eine Antriebsrolle 30 und an dessen anderem Ende eine Umlenkrolle 32 angebracht ist. Als Antriebsorgan für die Materialrolle 17 dient ein um die Antriebsrolle 30 und die Umlenkrolle 32 umlaufendes Endlosband 25, das als Reibband ausgebildet ist und dazu dient, über das der Materialrolle 17 zugewandete Trum kraftschlüssig mit der aufgewickelten Materialbahn 19 der Materialrolle 17 zusammenzuwirken.

Wie auch in der schematisierten Darstellung oben rechts in Fig. 1 gezeigt, ist jede Antriebsrolle 30 drehfest mit einer Antriebswelle 31 verbunden, die mittels eines Antriebsmotors M über einen Antriebsriemen 24 in Drehung versetzt werden kann, um das Reibband 25 anzutreiben und auf diese Weise die Materialbahn 19 von der Materialrolle 17 abzurollen.

Da die vier Spuren S1, S2, S3 und S4 des Interleavers parallel verlaufen und somit auch vier Materialrollen 17 nebeneinander auf dem gemeinsamen Dorn sitzen, sind die vier Antriebsarme 27 entsprechend in Querrichtung versetzt zueinander angeordnet. Dies ist in der schematisierten Darstellung oben rechts in Fig. 1 durch die Zuordnung der Spuren S1 bis S4 zu den einzelnen Antriebsrollen 30 der Antriebsarme 27 angedeutet.

Besonders vorteilhaft sind die räumliche Anordnung der Antriebsarme 27 sowie die Art und Weise des Drehantriebs für die Antriebsrollen 30. Die Drehachsen 29 der Antriebswellen 31 und somit der Antriebsrollen 30 fallen jeweils mit der Schwenkachse 28 des betreffenden Antriebsarmes 27 zusammen. Dabei ist nicht für alle Antriebsarme 27 eine einzige gemeinsame Schwenkachse 28 vorgesehen. Stattdessen sind die Antriebsarme 27 paarweise zusammengefasst, wobei für jedes Paar eine gemeinsame Schwenkachse 28 vorgesehen ist. Dabei sind den Spuren S1 und S3 zwei um eine obere Schwenkachse 28 verschwenkbare Antriebsarme 27 zugeordnet, während den Spuren S2 und S4 zwei Antriebsarme 27 zugeordnet sind, die um eine untere Schwenkachse 28 verschwenkbar sind.

In dem dargestellten Ausführungsbeispiel besitzen alle Antriebsarme 27 die gleiche Länge und liegen die obere Schwenkachse 28 und die untere Schwenkachse 28 auf einem Kreiszylinder um die gemeinsame Drehachse 33 der Materialrollen 17. Alternativ können die Antriebsarme 27 unterschiedlich lang und die Schwenkachsen 28 anders angeordnet sein.

Sowohl für das obere Paar von Antriebsarmen 27 als auch für das untere Paar von Antriebsarmen 27 ist jeweils ein Koaxialwellenantrieb 35 bzw. 37 vorgesehen. Die beiden Antriebsmotoren M1 und M3 gehören zu dem oberen Koaxialwellenantrieb 35, während der untere Koaxialwellenantrieb 37 die beiden Antriebsmotoren M4 und M2 umfasst. Ein Motor M3 bzw. M4 ist jeweils mit einer inneren Antriebswelle 31 für die axial weiter entfernt gelegene Antriebsrolle 30 verbunden, während der jeweils andere Motor M1 bzw. M2 mit einer die innere Antriebswelle 31 umgebenden Hohlwelle 31 verbunden ist, auf der die näher gelegene Antriebsrolle 30 sitzt.

Wie bereits erwähnt, sind die Antriebsmotoren M1 bis M4 nicht direkt mit den Antriebswellen 31 verbunden, sondern über Antriebsriemen 24. Dies ermöglicht eine versetzte oder abgesetzte Positionierung der Motoren und folglich eine optimale Nutzung des im Interleaver zur Verfügung stehenden Raumes. Darüber hinaus kann hierdurch der Interleaver vergleichsweise schmal gebaut werden, da die Motoren M1 bis M4 jeweils nicht in axialer Verlängerung der Antriebswellen 31 positioniert zu werden brauchen.

Ein weiterer Vorteil dieses Antriebskonzepts besteht darin, dass alle Motoren M1 bis M4 einschließlich der Antriebsriemen 24 nur auf einer Seite des Interleavers angeordnet sind. Über die andere Seite des Interleavers ist dieser Bereich daher besser zugänglich. Besonders vorteilhaft ist, dass alle Antriebsrollen 30 und somit Antriebsarme 27 von der gleichen Seite aus - nämlich ausgehend von der "bevorzugten" Bedienseite - auf die jeweilige Antriebswelle 31 aufgesteckt und von dieser abgenommen werden können. Dies erleichtert nicht nur die Reinigung und die Wartung, sondern ermöglicht auch einen einfachen und schnellen Umbau beispielsweise dann, wenn auf einen Slicer- und Interleaverbetrieb mit einer anderen Spuranzahl umgestellt werden soll.

Diese Vorteile gelten auch für die Anordnung der Materialrollen 17, die alle von derselben Seite aus - und zwar von der gleichen Seite wie die Abrollantriebe 21 - auf den gemeinsamen Dorn aufgesteckt und von diesem abgenommen werden können. Es genügt daher, wenn die Funktionsbereiche des Interleavers nur von einer Seite aus zugänglich sind.

Für jeden Antriebsarm 27 ist zudem ein nicht dargestellter Schwenkantrieb vorgesehen. Der Schwenkantrieb kann beispielsweise eine Kolben/Zylinder-Anordnung umfassen. Hierdurch können die Antriebsarme 27 jeweils in einen passiven Zustand geschwenkt werden, in welchem das Reibband 25 außer Reibeingriff mit der Materialrolle 17 ist. Bei diesem passiven Zustand kann es sich beispielsweise um eine Parkposition handeln, in welche die Antriebsarme 27 geschwenkt werden, wenn neue Materialrollen 17 eingesetzt werden sollen.

Dass erfindungsgemäß die Abrollantriebe 21 jeweils mit ihrem Reibband 25 kraftschlüssig am äußeren Umfang der Materialrolle 17 angreifen, um die Materialbahn 19 abzurollen, hat den Vorteil, dass die Abrollrate, d.h. die pro Zeiteinheit abgerollte Bahnlänge, unabhängig von dem momentanen Durchmesser der Materialrolle 17 und somit deren Aufbrauchgrad ist. Die vorstehend erwähnten Schwenkantriebe (nicht dargestellt) können jeweils den Antriebsarm 27 in Richtung der Drehachse 33 der Materialrolle 17 mit einer vorgegebenen Kraft bzw. einem vorgegebenen Drehmoment vorspannen, so dass der Antriebsarm 27 dem während des Betriebs abnehmenden Durchmesser der Materialrolle 17 nachgeführt wird und der Reibeingriff zwischen dem Reibband 25 und der aufgewickelten Materialbahn 19 stets gleich groß ist.

Mit einem gestrichelten Kreis ist eine nahezu aufgebrauchte Materialrolle 17 dargestellt, deren Durchmesser nur wenig größer als der Durchmesser des Rollenkerns 113 ist. Ein oberer Antriebsarm 27 sowie ein unterer Antriebsarm 27 sind zur Veranschaulichung eines entsprechend weit in Richtung der Drehachse 33 der Materialrollen 17 geschwenkten Zustands gestrichelt dargestellt.

Der Betrieb der Abrollantriebe 21 richtet sich nach Anforderungen von der zentralen Steuereinrichtung 39. Wird in einer Spur weniger Material oder vorübergehend kein Material benötigt, kann die Abrollrate der betreffenden Spur durch Verringern der Umlaufgeschwindigkeit des Reibbandes 25 bzw. durch Abschalten des Antriebsmotors M entsprechend geändert werden. In einem Nichtantriebszustand bei ausgeschaltetem Antriebsmotor M verbleibt der betreffende Antriebsarm 27 mit seinem Reibband 25 in Reibeingriff mit der aufgewickelten Materialbahn 19, wird also nicht etwa mittels des vorstehend erwähnten Schwenkantriebs (nicht dargestellt) außer Eingriff mit der Materialrolle 17 geschwenkt. Dies hat den Vorteil, dass das Reibband 25 als Bremse für die Materialrolle 17 wirksam ist, wodurch ein trägheitsbedingtes Weiterdrehen der Materialrolle 17 verhindert wird.

Das Abnehmen der Materialbahnen 19 von den Materialrollen 17 umfasst nicht nur das Abrollen mittels der vorstehend erläuterten Abrollantriebe 21, sondern außerdem das Fördern der Materialbahnen 19 in den Schlaufenspeicher 61 hinein. Hierzu umfasst die Abnahmeeinrichtung eine Fördereinrichtung 23 die zusätzlich schematisiert oben in der Mitte der Fig. 1 dargestellt ist.

Für jede Spur S1 bis S4 umfasst die Fördereinrichtung 23 eine Förderrolle 47, die zusammen mit einer Gegenrolle 48 einen Förderspalt für die jeweilige Materialbahn 19 bildet. Alle Förderrollen 47 sitzen auf einer gemeinsamen Antriebswelle 45, werden also nur gemeinsam angetrieben, und zwar über einen gemeinsamen Antriebsmotor 41, der über einen Antriebsriemen 42 die gemeinsame Antriebswelle 45 der Förderrollen 47 in Drehung versetzt.

Der spurindividuelle Betrieb dieser Fördereinrichtung 23 wird dadurch erreicht, dass jeder Förderrolle 47 eine Rutschkupplung 43 zugeordnet ist, die zwischen der Förderrolle 47 und der gemeinsamen Antriebswelle 31 angeordnet ist. Bei den Rutschkupplungen 43 handelt es sich jeweils um eine Magnetkupplung, deren Schaltpunkt eingestellt werden kann.

Über die Steuereinrichtung 39 wird die Fördereinrichtung 23 derart betrieben, dass die Materialbahnen 19 jeweils zwischen der betreffenden Materialrolle 17 und der betreffenden Förderrolle 47 stets auf Spannung gehalten wird. Während des Betriebs kann die gemeinsame Antriebswelle 45 mit einer konstanten Drehzahl rotieren, die auf einen erwarteten Betrieb des Interleavers für das jeweilige Schneidprogramm des Slicers abgestimmt ist. Wird in einer Spur der Abrollantrieb 21 angehalten oder verringert sich die Abrollrate in einer Spur, braucht in den Betrieb der Fördereinrichtung 23 nicht aktiv eingegriffen zu werden, da eine unter die Förderrate der Fördereinrichtung 23 abfallende Abrollrate in einer Spur durch die Kupplung 43 dieser Spur abgefangen wird, ohne dass die betreffende Materialbahn 19 übermäßig beansprucht wird oder gar reißt.

Ein Vorteil dieses Konzepts besteht darin, dass die Fördereinrichtung 23 nur einen einzigen Antrieb mit Antriebsmotor 41 und Antriebsriemen 42 und lediglich eine einzige gemeinsame Antriebswelle 45 für alle Spuren S1 bis S4 benötigt und keine konstruktiven oder steuerungstechnischen Maßnahmen erforderlich sind, um einen aktiv spurindividuellen Betrieb der Fördereinrichtung 23 zu realisieren.

Wenn nicht gerade in einer der Spuren die Kupplung 43 aktiv ist und somit in dieser Spur vorübergehend kein Material in den Schlaufenspeicher 61 hinein gefördert wird, bestimmt die Förderrate der Fördereinrichtung 23 die in jeder Spur pro Zeiteinheit in den Schlaufenspeicher 61 gelangende Bahnlänge. Da letztlich der über die Steuereinrichtung 39 gesteuerte Betrieb der einzelnen Abrollantriebe 21 darüber entscheidet, ob und wieviel Material pro Zeiteinheit in den einzelnen Spuren von der jeweiligen Materialrolle 17 abgerollt wird, sind die einzelnen Förderraten in den Schlaufenspeicher 61 hinein letztlich durch die einzelnen Abrollraten bestimmt.

Der spurbezogene Materialbedarf im Schneidbereich wird von der Steuereinrichtung 39 ermittelt und durch eine entsprechende spurbezogene Ansteuerung der Abrollantriebe 21 sichergestellt. Der Schlaufenspeicher 61 sorgt in jeder Spur für eine Entkopplung zwischen der trägen Materialrolle 17 einerseits und der hochdynamischen Ausgabeeinrichtung 71 andererseits, die im Takt des Schneidmessers 51 jeweils kurzfristig eine der Länge des jeweils benötigten Zwischenblatts 15 entsprechende Bahnlänge ausgeben muss. Ein derart hochdynamisches taktweises Ausstoßen von relativ langen Materialabschnitten wäre mit einem Abziehen der Materialbahn 19 unmittelbar von der Materialrolle 17 unvereinbar.

Die Steuereinrichtung 39 sorgt deshalb dafür, dass in jeder Spur zu jedem Zeitpunkt eine für einen störungsfreien Ausgabebetrieb der Ausgabeeinrichtung 71 ausreichend große Bahnlänge im Schlaufenspeicher 61 zur Verfügung steht, indem für eine stets ausreichend große Materialschlaufe 20 im Schlaufenspeicher 61 gesorgt wird.

Die Bildung und Aufrechterhaltung dieser Materialschlaufen 20 in den einzelnen Spuren wird zum einen durch einen ausreichend großen "Nachschub" mittels der Abnahmeeinrichtung, also der Abrollantriebe 21 und der Fördereinrichtung 23, und zum anderen durch einen Luftkreislauf mit einer kombinierten Saug- und Blaseinrichtung 63, 65 erzielt.

Ein zu dieser kombinierten Saug- und Blaseinrichtung 63, 65 gehörendes Gebläse 64 ist mit seiner Saugseite über eine Saugleitung 66 an ein Unterdruckgehäuse 68 angeschlossen, in welchem mehrere, innerhalb des Gehäuses 68 strömungstechnisch voneinander getrennte Unterdruckkammern 69 ausgebildet sind. Mittels nicht dargestellter Sensoren kann der Druck in jeder Unterdruckkammer 69 gemessen und der Steuereinrichtung 39 zur Verfügung gestellt werden.

Zu einem Schlaufenbereich des Schlaufenspeichers 61 hin ist das Gehäuse 68 durch eine gekrümmte Anlagefläche 67 begrenzt, in der Öffnungen ausgebildet sind, über welche Luft aus dem Schlaufenbereich in die einzelnen Unterdrucckammern 69 gelangen kann, wie es durch die kleinen Pfeile angedeutet ist. Die Unterdruckkammern 69 sind jeweils an die Saugleitung 66 und somit an die Saugseite des Gebläses 64 angeschlossen, das mit seiner Druckseite in den Schlaufenbereich hinein gerichtet ist, wie es in Fig. 1 durch den Pfeil angedeutet ist.

Dieser Luftkreislauf bewirkt, dass stets eine bestimmungsgemäße Materialschlaufe 20 geformt wird und die Materialbahn 19 bestimmungsgemäß an der Anlagefläche 67 des Unterdruckgehäuses 68 anliegt. Da die Materialbahn 19 aufgrund des in den Unterdruckkammern 69 herrschenden Unterdrucks gegen die Anlagefläche 67 gesaugt wird, dient die Anlagefläche 67 gleichzeitig als Bremse für die Materialbahnen 19. Hierdurch werden die Materialbahnen 19 stets unter leichter Spannung gehalten, wodurch verhindert wird, dass sich die Materialbahnen 19 aufstauchen, wenn die im Schneidtakt arbeitende Ausgabeeinrichtung 71 die Materialbahnen 19 hochdynamisch aus dem Schlaufenspeicher 61 herauszieht. Die Bremswirkung der Anlagefläche 67 bzw. der Unterdruckkammern 69 ist dabei derart eingestellt, dass dieser hochdynamische Entnahmeprozess nicht beeinträchtigt wird.

Mittels der erwähnten Drucksensoren in den Unterdruckkammern 69 kann die Steuereinrichtung 39 erkennen, welche Unterdruckkammer 69 von der Materialbahn 19 bedeckt ist und welche nicht. Aus diesen Informationen kann auf einfache Weise mit ausreichender Genauigkeit ein Maß für die momentane Größe der Materialschlaufe 20 im Schlaufenbereich des Schlaufenspeichers 61 abgeleitet werden. In Fig. 1 ist die gestrichelt gezeichnete Materialbahn 19 mit einer maximalen Schlaufengröße dargestellt. Durch eine gepunktete Linie ist der Verlauf der Materialbahn 19 mit minimaler Schlaufengröße angedeutet, bei der nur noch die oberste Unterdruckkammer 69 teilweise von der Materialbahn 19 abgedeckt ist.

Die Steuerung 39 kann gemäß der so ermittelten individuellen Schlaufengrößen spurindividuell die einzelnen Abrollantriebe 21 aktivieren oder deaktivieren bzw. die einzelnen Abrollraten durch entsprechende Ansteuerung der Motoren M1 bis M4 verändern, um sicherzustellen, dass für jede Spur zu jedem Zeitpunkt eine ausreichend große Materialschlaufe 20 vorhanden ist, um die vorstehend erläuterte Entkopplung zwischen der betreffenden Spur der Ausgabeeinrichtung 71 und der zugehörigen Materialrolle 17 aufrechtzuerhalten.

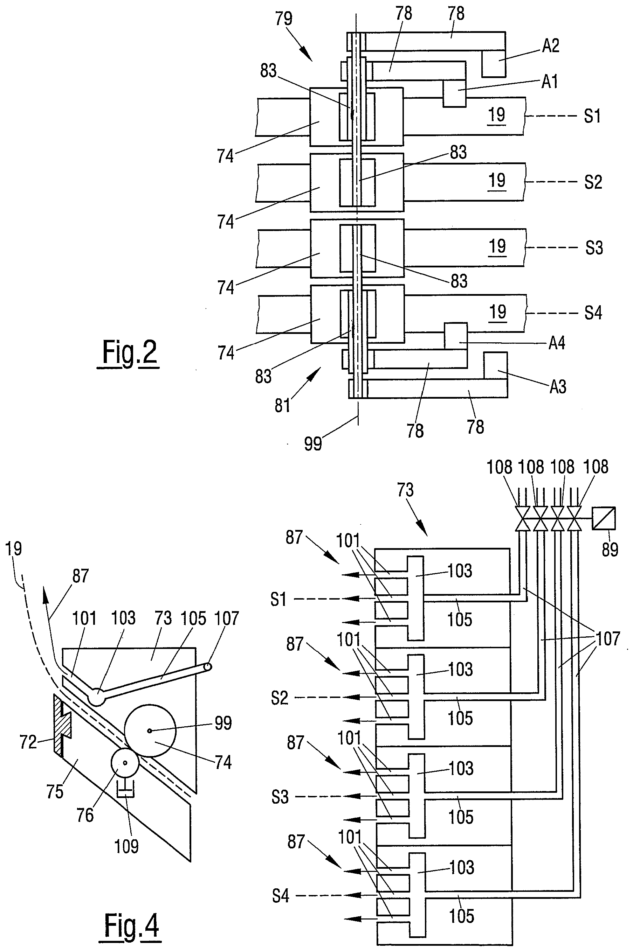

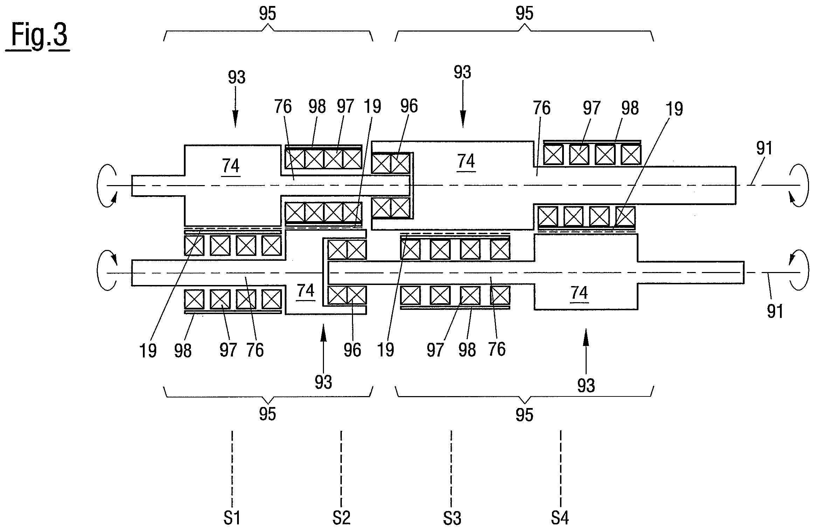

Die Ausgabeeinrichtung 71 ist ebenfalls zu einem spurindividuellen Betrieb ausgebildet. Hierzu umfasst eine Vorschubeinheit 73 für jede der Spuren S1 bis S4 eine Vorschubwalze 74, wie nachstehend anhand zweier möglicher Ausführungsbeispiele gemäß den Fig. 2 und 3 näher erläutert wird. Die Vorschubwalzen 74 besitzen eine gemeinsame Drehachse 99, wobei für jede Vorschubwalze 74 ein eigener Antriebsmotor A1, A2, A3 bzw. A4 vorgesehen ist, der über einen Antriebsriemen 78 mit einer Antriebswelle 83 (vgl. Fig. 2) zusammenwirkt, mit der die betreffende Vorschubwalze 74 drehfest verbunden ist.

Wie Fig. 2 zeigt, werden die beiden Vorschubwalzen 74 für die Spuren S1 und S2 über einen rechten Koaxialwellenantrieb 79 angetrieben, während ein linker Koaxialwellenantrieb 81 die beiden Vorschubwalzen 74 der anderen beiden Spuren S3 und S4 antreibt. Die jeweils innenliegende Vorschubwalze 74 wird über eine innenliegende Antriebswelle 83 angetrieben, wohingegen die jeweils außenliegende Vorschubwalze 74 über eine die innenliegende Antriebswelle 83 umgebende Hohlwelle 83 angetrieben wird.

Auf diese Weise lässt sich ein spurindividueller Antrieb von vier auf einer gemeinsamen Drehachse 99 nebeneinander angeordneten Vorschubwalzen 74 für die Vorschubeinheit 73 der Ausgabeeinrichtung 71 realisieren.

Eine alternative Ausgestaltung für einen Vierspurantrieb mit vier individuell antreibbaren Vorschubwalzen 74 ist schematisch in Fig. 3 dargestellt. Hier sind zwei parallel verlaufende Drehachsen 91 vorgesehen, wobei auf jeder der beiden Achsen 91 jeweils zwei Zweispureinheiten 95 nebeneinander angeordnet sind. Jede Zweispureinheit 95 umfasst eine Vorschubwalze 74 und eine Andrückrolle 76, die drehfest miteinander verbunden sind und beispielsweise einstückig miteinander ausgebildet sein können. Jede Vorschubwalze 74 wirkt unmittelbar mit einer jeweiligen Materialbahn 19 zusammen, während die mitrotierende Andrückrolle 76 mit einer Freilauffunktion bezüglich der Materialbahn 19 in ihrer Spur versehen ist. Die Freilauffunktion ist dadurch realisiert, dass die Andrückrolle 76 über ein Wälzlager 97 eine frei drehbare Andrückhülse 98 für die Materialbahn 19 trägt.

Für jede der Spuren S1 bis S4 bilden also eine Vorschubwalze 74 auf der einen Achse 91 und eine Andrückeinheit aus Andrückrolle 76 und Andrückhülse 98 auf der anderen Achse 91 ein Paar 93, das einen Vorschubspalt für die betreffende Materialbahn 19 bildet.

Jede Zweispureinheit 95 kann beispielsweise über einen nicht dargestellten Antriebsriemen mittels eines zugehörigen Antriebsmotors (nicht dargestellt) um die jeweilige Achse 91 gedreht werden, wobei die beiden Achsen 91 mit entgegengesetztem Drehsinn angetrieben werden. Benachbarte Zweispureinheiten 95 auf einer gemeinsamen Achse 91 sind relativ zueinander verdrehbar. Hierzu greift jeweils eine axiale Verlängerung einer Andrückrolle 76 in eine stirnseitige Vertiefung der benachbarten Vorschubwalze 74 ein, an der die Verlängerung der Andrückrolle 76 in radialer Richtung durch ein Wälzlager 96 abgestützt ist.

Durch diese Anordnung ist ein spurindividueller Vorschub für vier nebeneinanderliegende Spuren S1 bis S4 als eine besonders kompakte Einheit realisiert, in welche die den einzelnen Vorschubwalzen 74 zugeordneten Gegeneinheiten bzw. Andrückeinheiten 76, 98 integriert sind. Eine Aufteilung in eine Vorschubeinheit einerseits und eine Gegeneinheit andererseits wie beim Ausführungsbeispiel gemäß den Fig. 1 und 2 ist hier folglich nicht vorgesehen.

Wie Fig. 1 zeigt, ist bei dem hier dargestellten Ausführungsbeispiel zusätzlich zu der Vorschubeinheit 73 mit den vier spurindividuell antreibbaren Vorschubwalzen 74 eine Gegeneinheit 75 vorgesehen. Die Gegeneinheit 75 kann für jede Vorschubwalze 74 zumindest eine zugehörige Andrückrolle 76 aufweisen, die elastisch oder federnd gelagert ist, wie in Fig. 1 schematisch durch die Federung 77 und in Fig 4 schematisch durch eine als Federung ausgebildete Kolben/ZylinderAnordnung 109 angedeutet ist.

Alternativ kann die Gegeneinheit 75 eine Vielzahl von längs einer parallel zur Drehachse 99 der Vorschubwalzen 74 verlaufenden Achse verteilt angeordneten Gegenelementen insbesondere in Form von individuell federnd gelagerten Andrückwalzen oder Andrückrollen jeweils mit einem gegenüber den Vorschubwalzen 74 kleinen Durchmesser aufweisen. Diese nicht angetriebenen Gegenelemente bilden mit jeder der Vorschubwalzen 74 einen Vorschubspalt für eine der Materialbahnen 19. Derartige Gegeneinheiten oder Andrückeinheiten für Ausgabeeinrichtungen von Interleavern sind grundsätzlich bekannt, weshalb hierauf nicht näher eingegangen zu werden braucht.

Wie die Darstellung unten links in Fig. 1 schematisch zeigt, besteht eine Besonderheit der Ausgabeeinrichtung 71 darin, dass die Vorschubeinheit 73 und die Gegeneinheit 75 zusammen mit einer auch als Schneidbrille, Formschale oder Gegenmesser bezeichneten Schneidkante 85 an einer stationären Aufnahme 70 angebracht sind, die an einem Maschinengestell 115 des Slicers befestigt ist.

Die Aufnahme 70 und die Komponenten Gegeneinheit 75, Vorschubeinheit 73 und Schneidkante 85 sind derart miteinander korrespondierend ausgebildet, dass diese Komponenten ausschließlich in einer einzigen Reihenfolge an der Aufnahme 70 werkzeuglos montiert werden können.

Dabei wird zuerst die Gegeneinheit 75 an der Aufnahme 70 angeordnet. Durch anschließendes Anbringen der Vorschubeinheit 73 wird die Gegeneinheit 75 in ihrer Sollposition fixiert und gesichert. Die Anbringung der Vorschubeinheit 73 erfordert eine kombinierte Dreh-/Schwenkbewegung in eine Endposition, die -wie durch den Pfeil in der großen Darstellung der Fig. 1 angedeutet - zur Folge hat, dass beim Anbringen der Vorschubeinheit 73 alle Antriebsriemen 78 der Antriebsmotoren A1 bis A4 gleichzeitig gespannt werden, die zuvor im entspannten Zustand um die zu beiden Seiten vorstehenden Antriebswellen 83 der Vorschubwalzen 74 gelegt worden sind. Entsprechend werden bei der Entnahme der Vorschubeinheit 73 die Antriebsriemen 78 automatisch entspannt.

Zuletzt wird die Schneidkante 85 an der Aufnahme 70 angebracht. Die Schneidkante 85 wiederum positioniert und sichert die Vorschubeinheit 73 in ihrer Sollposition. Eine Spanneinrichtung 117, die zwei pneumatisch relativ zur Aufnahme 70 - wie durch die beiden Doppelpfeile angedeutet - verstellbare Spannbolzen 117 umfasst, positioniert und sichert abschließend die Schneidkante 85 und damit alle drei Komponenten Gegeneinheit 75, Vorschubeinheit 73 und Schneidkante 85 an der Aufnahme 70.

Die Aufnahme 70 kann darüber hinaus zur Anbringung weiterer Einrichtungen dienen. So kann es z.B. in der Praxis erforderlich sein, den sogenannten Schneidspalt zwischen dem Schneidmesser 51 und der Schneidkante 85 auf einen bestimmten Wert einzustellen. In diesem Zusammenhang können Sensoren wie z.B. Schwingungssensoren eingesetzt werden, die an der Aufnahme 70 angebracht oder in die Aufnahme 70 integriert werden können.

Auf diese Weise ist eine einfache und zuverlässige werkzeuglose Montage und Demontage der drei genannten Komponenten realisiert.

Mittels der Spannbolzen 117 kann zudem eine Abfrage durch die Steuereinrichtung 39 erfolgen und erkannt werden, ob überhaupt eine Schneidkante 85 vorhanden ist und ob - in Abhängigkeit von dem jeweils eingestellten Schneidprogramm - die richtige Schneidkante 85 montiert worden ist. Bei fehlender Schneidkante 85 beispielsweise fahren die Spannbolzen 117 weiter aus als bei vorhandener korrekter Schneidkante 85 - diese Fehlpositionierung der Spannbolzen 117 kann von der Steuereinrichtung 39 erkannt werden.

Wie vorstehend bereits erläutert, erfolgt das Ausstoßen der Materialbahn 19 mittels der Ausgabeeinrichtung 71 derart, dass das vordere Ende der Materialbahn 19 vor der Schnittfläche des jeweiligen Produktes 11 liegt, damit es zusammen mit der als nächstes abzutrennenden Scheibe 13 von der Materialbahn 19 mittels des Schneidmessers 51 abgeschnitten und so ein Zwischenblatt 15 bilden kann.

Um das vordere Ende der Materialbahn 19 in diesem Sinne zu beeinflussen, wird mittels einer Luftströmung in dem Bereich zwischen der Materialbahn 19 und der Schnittfläche des Produkts 11 ein Unterdruck erzeugt, der bewirkt, dass sich das vordere Ende der Materialbahn 19 gegen die Schnittfläche legt. Dieses Konzept ist grundsätzlich bekannt. Die Luftströmung kann z.B. dadurch erzeugt werden, dass Druckluft über einen sich quer zur Materialbahn 19 erstreckenden Spalt oder über mehrere in Querrichtung verteilt angeordnete Öffnungen ausgestoßen wird.

Wie Fig. 4 zeigt, wird erfindungsgemäß über die Vorschubeinheit 73 für jede der Spuren S1 bis S4 eine individuell variierbare Luftströmung 87 erzeugt, so dass die freien Enden der einzelnen Materialbahnen 19 spurindividuell beeinflusst werden können. Die einzelnen Luftströmungen 87 können in zeitlicher Hinsicht sowie hinsichtlich ihrer Stärke spurindividuell variiert werden.

Dies wird dadurch erreicht, dass im vorderen Bereich der Vorschubeinheit 73 oberhalb des von der Vorschubeinheit 73 und der Gegeneinheit 75 gebildeten Austrittsspalts für die einzelnen Materialbahnen 19 für jede Spur S1 bis S4 mehrere Austrittsöffnungen quer zur jeweiligen Materialbahn 19 verteilt angeordnet sind.

Jede Austrittsöffnung gehört zu einem in der Vorschubeinheit 73 ausgebildeten Auslasskanal 101, wobei alle Auslasskanäle 101 von einem gemeinsamen Verteilerraum 103 ausgehen, der über einen Einlasskanal 105 und eine Zufuhrleitung 107 mit einer nicht dargestellten Druckluftquelle in Verbindung steht. Jede Zufuhrleitung 107 ist mit einem steuerbaren Ventil 108 versehen. Die Ventile 108 können über eine Stelleinrichtung 89 spurindividuell angesteuert werden.

Hierdurch können für jede der Spuren S1 bis S4 das zeitliche Verhalten und die Stärke der jeweiligen Luftströmung 87 unabhängig von den jeweils anderen Spuren variiert werden.

Bei der in Fig. 4 außerdem dargestellten Leiste 72 handelt es sich um ein auswechselbares Verschleißteil bevorzugt aus Kunststoff, das als mit dem Schneidmesser 51 beim Durchtrennen der einzelnen Materialbahnen 19 zusammenwirkende Schneidkante dient.

Der Interleaver kann dazu ausgebildet sein, in jeder der einzelnen Spuren S1 bis S4 aufeinanderfolgende Materialbahnen 19 automatisch miteinander zu verbinden. In Fig. 1 sind schematisch mögliche Positionen dargestellt, an denen eine in den Interleaver integrierte Verbindungseinrichtung V angeordnet werden kann.

In Fig. 1 nicht dargestellt ist eine Wechseleinrichtung, die dazu ausgebildet ist, eine jeweils genutzte Materialrolle 17 automatisch gegen eine zu nutzende Materialrolle 17 zu wechseln. Die Wechseleinrichtung kann außerhalb des Interleavers angeordnet oder wenigstens zum Teil in den Interleaver integriert sein. Für jede der Spuren S1 bis S4 kann eine eigene Wechseleinrichtung vorgesehen sein. Alternativ können mehrere Spuren oder alle Spuren eine gemeinsame Wechseleinrichtung aufweisen.

Eine Mehrspurigkeit des Interleavers kann auch dadurch realisiert werden, dass für mehrere Spuren S eine gemeinsame, drehbar gelagerte Materialrolle 17 vorgesehen ist, wobei für die Materialbahn 19 dieser gemeinsamen Materialrolle 17 eine Einrichtung T zum Teilen der Materialbahn 19 in mehrere einzelne Materialbahnen 19 vorgesehen ist. Eine mögliche Position, an der eine solche, in den Interleaver integrierte Teilungseinrichtung T angeordnet werden kann, ist in Fig. 1 schematisch angedeutet. Für diese Spuren S, d.h. für die betreffende Materialrolle 17, ist dann lediglich ein Abrollantrieb 21 vorgesehen.

Dabei ist es z.B. möglich, dass ein vierspuriger Interleaver dadurch realisiert wird, dass zwei Materialrollen 17 vorgesehen sind, denen jeweils ein Abrollantrieb 21 und eine Teilungseinrichtung T zugeordnet sind, d.h. aus deren Materialbahn 19 jeweils zwei einzelne Materialbahnen 19 entstehen, so dass an die den Teilungseinrichtungen T nachgeordneten Einrichtungen vier einzelne Materialbahnen 19 wie in dem Fall gelangen, dass für jede Spur S eine eigene Materialrolle 17 und keine Teilungseinrichtung T vorgesehen ist.

Unterschiedliche Kombinationen sind denkbar. So kann z.B. bei einem vierspurigen Interleaver für zwei Spuren jeweils eine eigene Materialrolle und für zwei wietere Spuren eine gemeinsame Materialrolle und eine Teilungseinrichtung vorgesehen sein.

Bei dem erfindungsgemäßen Interleaver ist folglich eine durchgehend spurindividuelle Handhabung der einzelnen Materialbahnen 19 möglich, so dass der Interleaver mittels der Steuereinrichtung 39 in Abhängigkeit von dem Schneidprozess derart betrieben werden kann, dass der spurindividuelle Interleaverbetrieb perfekt auf den spurindividuellen Schneidbetrieb abgestimmt werden kann.

Der Vollständigkeit halber ist noch zu erwähnen, dass auch ein einspurig ausgebildeter oder vorübergehend einspurig betriebener Interleaver einen Abrollantrieb aufweisen kann, wie er vorstehend jeweils für eine der Spuren S1 bis S4 beschrieben ist.

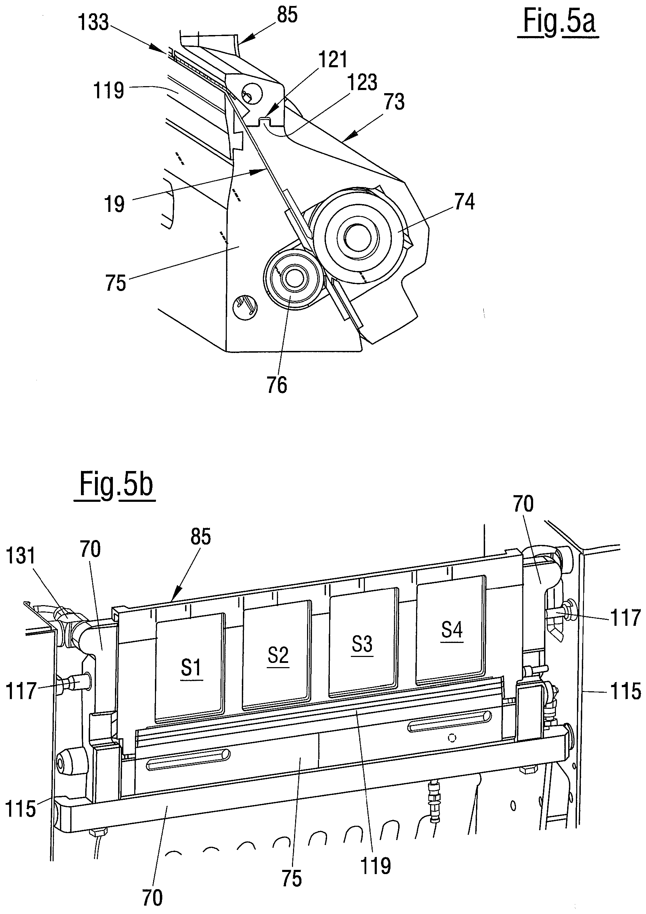

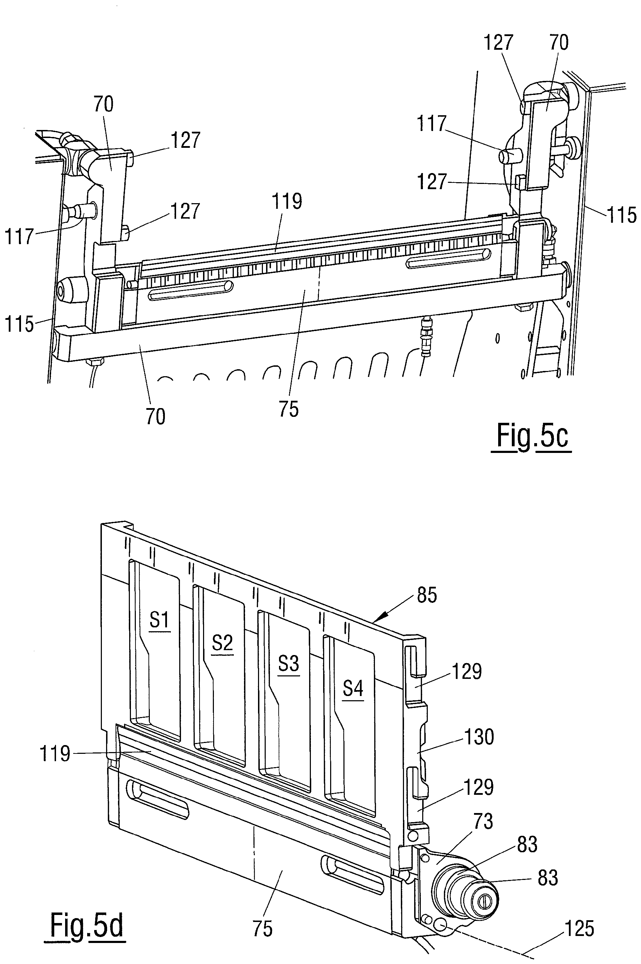

Wie die unten links in Fig. 1 schematisch gezeigte Anbringung von Vorschubeinheit 73, Gegeneinheit 74 und Schneidkante 85, die aufgrund der allseitig geschlossenen Durchbrüche für die einzelnen Spuren S1 bis S4 auch als Schneidbrille oder aufgrund der Abstimmung der Form der Durchbrüche auf die Querschnittsform der aufzuschneidenden Produkte als Formschale bezeichnet wird, beispielsweise konkret erfolgen kann, zeigt das Ausführungsbeispiel der Fig. 5a bis 5h.

Am Maschinengestell 115 ist die U-förmige Aufnahme 70 angebracht (vgl. z.B. Fig. 5b), die eine horizontale Quertraverse und zwei darauf senkrecht stehende Halter umfasst. Die Aufnahme 70 ist zur Ausrichtung der wiederum bezüglich der Aufnahme 70 ausgerichteten Komponenten 73, 75, 85 relativ zu dem Maschinengestell 115 ausrichtbar und in der jeweils korrekt ausgerichteten Stellung am Maschinengestell 115 fixierbar.

Am in der Vorderansicht der Fig. 5b linken Halter der Aufnahme 70 ist ein Schwingungssensor 131 angebracht, der z.B. zur Schneidspalteinstellung verwendet werden und dabei dazu dienen kann, eine Berührung des Schneidmessers mit der Schneidkante 85 zu detektieren. Dies ist dem Fachmann grundsätzlich bekannt und braucht daher hier nicht näher erläutert zu werden.

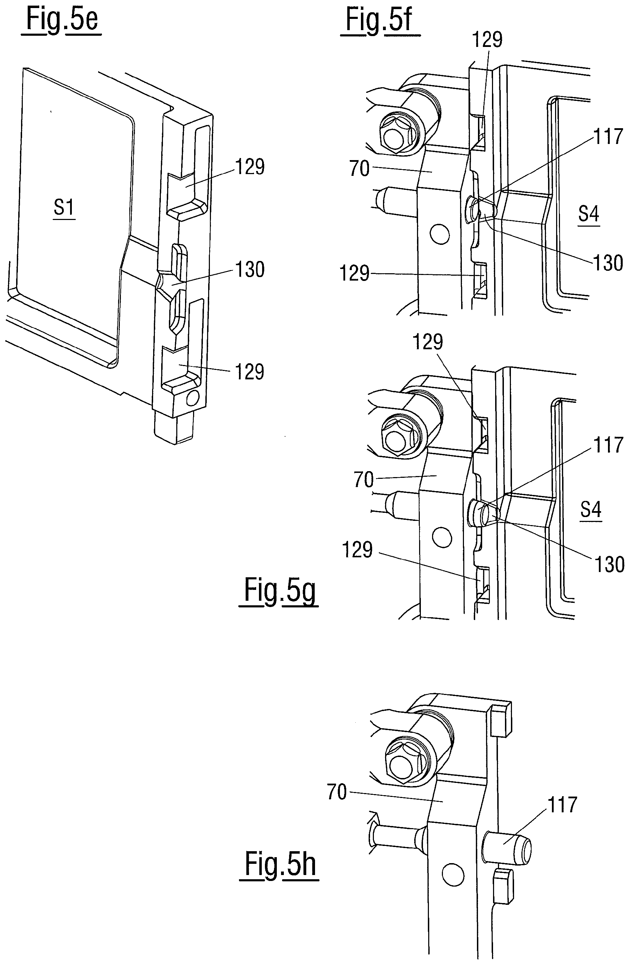

Am Maschinengestell 115 sind die Spannbolzen 117 gelagert, die jeweils durch einen der Halter der Aufnahme 70 hindurchragen und mit einer konischen Aufnahme 130 (vgl. z.B. Fig. 5e) der Schneidkante 85 zusammenwirken, um diese in der korrekten Ausrichtung zu fixieren.

Bei der Montage wird zunächst die Gegeneinheit 75 an der Aufnahme 70 positioniert. Anschließend wird die Vorschubeinheit 73 mit der Gegeneinheit 75 verschwenkbar gekoppelt, wobei die Schwenkachse 125 in Fig. 5d dargestellt ist. Wie in Verbindung mit Fig. 1 bereits beschrieben, können jeweils die seitlich zugänglichen Enden der Antriebswellen 83 (vgl. z.B. auch Fig. 2) bei von der Gegeneinheit 75 weggeschwenkter Vorschubeinheit 73 mit den hier nicht, aber in Fig. 2 dargestellten Antriebsriemen 78 gekoppelt werden, die durch Zurückschwenken der Vorschubeinheit 73 in die Stellung gemäß Fig. 5a gespannt werden.

In dieser Stellung bilden dann die einzelnen Antriebswalzen 74 der Vorschubeinheit 73 und die Andrückrolle 76 der Gegeneinheit 75 den Vorschubspalt für die Materialbahn 19. Während des Betriebs tritt die Materialbahn 19 aus einem Austrittspalt 133 aus, der vorne von einer auswechselbar auf die Gegeneinheit 75 aufgeschobenen oder aufgesteckten Leiste 119 begrenzt wird. Fig. 5a zeigt einen Schnitt durch eine Antriebswalze 74 und die Andrückrolle 76 in einer Ebene senkrecht zu deren Drehachsen.

Abgeschlossen wird die Montage durch Einsetzen der Schneidkante 85, was wie bei Gegeneinheit 75 und Vorschubeinheit 73 werkzeuglos erfolgt. Die Schneidkante 85 positioniert und sichert die Vorschubeinheit 73 und damit die Gesamtanordnung der drei Komponenten 75, 73 und 85 in ihrer Sollstellung relativ zu der Aufnahme 70 und damit zu dem Maschinengestell 115. Hierzu dienen die beiden seitlichen Spannbolzen 117, die jeweils mit einer der seitlichen konischen Aufnahmen 130 der Schneidkante 85 zusammenwirken.

Wenn die für die jeweilige Anwendung korrekte Schneidkante 85 in der korrekten Lage positioniert ist, was unter anderem voraussetzt, dass die Schneidkante 85 mit einer an ihrer Unterseite ausgebildeten Nut 121 auf eine an der Oberseite der Vorschubeinheit 73 ausgebildeten Feder 123 gesetzt ist, können die Spannbolzen 117, die nach einem entsprechenden Befehl durch die Steuereinrichtung 39 (vgl. Fig. 1) ausgefahren werden, mit den Aufnahmen 130 zusammenwirken und die Schneidkante 85 positionieren und fixieren.

Dies zeigt die Abfolge der Fig. 5f und 5g. In Fig. 5f sind die Spannbolzen 117 jeweils noch nicht ausgefahren. Die Schneidkante 85 ist aber bereits über seitliche Aussparungen 129 (vgl. auch Fig. 5e, die eine Rückansicht eines Teils der Schneidkante 85 zeigt) mit nach innen vorstehenden Zapfen 127 an den Haltern der Aufnahme 70 gekoppelt worden. In Fig. 5g sind die Spannbolzen 117 jeweils in die bei vorhandener Schneidkante 85 mögliche Endstellung ausgefahren. Während Fig. 5f noch die Montagestellung zeigt, ist in Fig. 5g folglich die korrekte Verriegelungsstellung dargestellt.

Das Zusammenwirken der Nut 121 der Schneidkante 85 mit der Feder 121 der Vorschubeinheit 73 verhindert ein Durchbiegen der sich zwischen den Haltern der Aufnahme 70 quer zur Produktzuführrichtung erstreckenden Schneidkante 85, wenn die Schneidkante 85 während des Betriebs von den zugeführten Produkten 11 (vgl. Fig. 1) beaufschlagt wird.

Die Spannbolzen 117 dienen gleichzeitig dazu, Montagefehler zu detektieren, indem die Steuereinrichtung 39 dazu ausgebildet ist, sowohl einen zu geringen als auch einen übermäßigen Ausfahrweg der Spannbolzen 117 zu erkennen. Fig. 5h zeigt die Situation bei einer versehentlich fehlenden Schneidkante 85, wodurch eine Ausfahrbegrenzung für die Spannbolzen 117 durch die Aufnahmen 130 der Schneidkante 85 unterbleibt und folglich die Spannbolzen 117 übermäßig weit ausfahren. Dagegen können die Spannbolzen 117 nicht so weit wie von der Steuereinrichtung 39 erwartet ausfahren, wenn z.B. die Spannbolzen 117 trotz einer vorhandenen Schneidkante 85 nicht in die Aufnahmen 130 einfahren können. Dies ist z.B. dann der Fall, wenn keine oder eine zu tief sitzende Vorschubeinheit 73 montiert und folglich die auf der Vorschubeinheit 73 sitzende Schneidkante 85 ebenfalls zu tief angeordnet ist. Durch eine ausreichende vertikale Länge der seitlichen Aussparungen 129 der Schneidkante 85 ist dies bewusst ermöglicht, führt jedoch dazu, dass die ausfahrenden Spannbolzen 117 die Aufnahmen 130 der Schneidkante 85 verfehlen und folglich nicht weit genug ausfahren können.

Wenn ein Schneidbetrieb ohne Interleaver- oder Underleaver-Betrieb erwünscht ist, kann die Inter- bzw. Underleaver-Einheit aus Gegeneinheit 75 und Vorschubeinheit 73 weggelassen werden. Damit die gleichwohl benötigte Schneidkante 85 weiterhin korrekt positioniert werden kann, wird anstelle dieser Inter- bzw. Underleaver-Einheit eine hinsichtlich der vorstehend erläuterten Montageschnittstellen baugleiche, ansonsten aber funktionslose Ersatzeinheit montiert.

### Bezuqszeichenliste

- 11: Produkt
- 13: Scheibe
- 15: Zwischenblatt
- 17: Materialrolle
- 19: Materialbahn
- 20: Schlaufe
- 21: Abrollantrieb
- 23: Fördereinrichtung
- 24: Antriebsriemen
- 25: Reibband, Antriebsorgan
- 27: Antriebsarm
- 28: Schwenkachse
- 29: Drehachse der Antriebswellen
- 30: Antriebsrolle
- 31: Antriebswelle
- 32: Umlenkrolle
- 33: Drehachse der Materialrollen
- 35: oberer Koaxialwellenantrieb
- 37: unterer Koaxialwellenantrieb
- 39: Steuereinrichtung
- 41: Antrieb der Fördereinrichtung
- 42: Antriebsriemen
- 43: Kupplung
- 45: Antriebswelle
- 46: Produkthalter
- 47: Förderrolle
- 48: Gegenrolle
- 49: Produktzufuhr
- 50: Schneidebene
- 51: Schneidmesser
- 53: Produktauflage
- 55: Portionierband
- 61: Schlaufenspeicher
- 63: Saugeinrichtung, Bremse
- 64: Gebläse
- 65: Blaseinrichtung
- 66: Saugleitung
- 67: Anlagefläche
- 68: Gehäuse
- 69: Unterdruckkammer
- 70: Aufnahme
- 71: Ausgabeeinrichtung
- 72: Leiste
- 73: Vorschubeinheit
- 74: Vorschubwalze
- 75: Gegeneinheit
- 76: Andrückrolle
- 77: Federung
- 78: Antriebsriemen
- 79: rechter Koaxialwellenantrieb
- 81: linker Koaxialwellenantrieb
- 83: Antriebswelle
- 85: Schneidkante
- 87: Druckluftströmung
- 89: Stelleinrichtung
- 91: gemeinsame Achse
- 93: Paar
- 95: Zweispureinheit
- 96: Wälzlager
- 97: Wälzlager
- 98: Andrückhülse
- 99: gemeinsame Drehachse
- 101: Auslasskanal
- 103: Verteilerraum
- 105: Einlasskanal
- 107: Zufuhrleitung
- 108: Ventil
- 109: Kolben/Zylinder-Anordnung
- 111: Schacht
- 113: Rollenkern
- 115: Maschinengestell
- 117: Spannbolzen
- 119: Leiste
- 121: Nut
- 123: Feder
- 125: Achse
- 127: Zapfen
- 129: Aussparung
- 130: Aufnahme
- 131: Schwingungssensor
- 133: Austrittsspalt

- S: Spur
- M: Antriebsmotor des Abrollantriebs
- A: Antriebsmotor für Vorschubwalze
- V: Verbindungseinrichtung
- T: Teilungseinrichtung

## Patentansprüche

1. Vorrichtung zum einspurigen oder mehrspurigen Bereitstellen von bahnförmigem Zwischenblattmaterial an einem Schneidbereich, in welchem einspurig oder mehrspurig zugeführte Produkte (11) in Scheiben (13) geschnitten und Zwischenblätter (15) eingebracht werden, die im Schneidbereich von dem bereitgestellten Zwischenblattmaterial abgetrennt werden,
mit einer Ausgabeeinrichtung (71), die zum Ausstoßen wenigstens einer Materialbahn (19) in den Schneidbereich ausgebildet ist,
wobei die Ausgabeeinrichtung (71) zumindest eine angetriebene Vorschubwalze (74) und wenigstens eine Gegeneinheit (75) umfasst, die zusammen mit der Vorschubwalze (74) einen Vorschubspalt für die Materialbahn (19) bildet, und
wobei die Ausgabeeinrichtung (71) zu einem mehrspurigen Ausstoßen von Materialbahnen (19) ausgebildet ist und für jede Spur (S) eine angetriebene Vorschubwalze (74) umfasst,
wobei die Vorschubwalzen (74) der einzelnen Spuren (S) paar- oder gruppenweise zusammengefasst sind und für jedes Paar bzw. jede Gruppe ein Koaxialwellenantrieb (79, 81) mit mehreren koaxial ineinander liegenden Antriebswellen (83) vorgesehen ist, die jeweils einer der Vorschubwalzen (74) zugeordnet sind.

2. Vorrichtung nach Anspruch 1,
wobei die Vorschubwalze (74) in eine Vorschubeinheit (73) der Ausgabeeinrichtung (71) integriert und über einen Antriebsriemen (78) mit einem außerhalb der Vorschubeinheit (73) angeordneten Antriebsmotor (A) für die Vorschubwalze (74) gekoppelt ist, wobei der Antriebsriemen (78) durch Bewegen der Vorschubeinheit (73), insbesondere durch Verschwenken der Vorschubeinheit (73), gespannt und gelöst werden kann.

3. Vorrichtung nach Anspruch 1 oder 2,
wobei durch eine interne oder externe Steuereinrichtung (39) die Ausgabeeinrichtung (71) durch spurindividuelles Betreiben der einzelnen Vorschubwalzen (74) steuerbar ist.

4. Vorrichtung nach einem der vorhergehenden Ansprüche,
wobei für jede Antriebswelle (83) ein Riemenantrieb mit einem versetzt zur Antriebswelle (83) angeordneten Antriebsmotor (A) vorgesehen ist.

5. Vorrichtung nach einem der vorhergehenden Ansprüche,
wobei zwei Paare bzw. Gruppen von Vorschubwalzen (74) vorgesehen sind, die von gegenüberliegenden Seiten aus antreibbar sind.

6. Vorrichtung nach einem der vorhergehenden Ansprüche,
wobei die Ausgabeeinrichtung (71) eine stationäre Aufnahme (70) umfasst, an der zumindest die Gegeneinheit (75) und eine Vorschubeinheit (73) in einer einzigen vorgegebenen Reihenfolge, insbesondere werkzeuglos, montierbar sind, insbesondere wobei an der Aufnahme (70) zusätzlich eine Schneidkante (85), insbesondere werkzeuglos, montierbar ist, wobei die Gegeneinheit (75), die Vorschubeinheit (73) und die Schneidkante (85) in einer einzigen vorgegebenen Reihenfolge an der Aufnahme (70) montierbar sind.

7. Vorrichtung nach Anspruch 6,
wobei für zumindest eine der Komponenten Gegeneinheit (75) und Vorschubeinheit (73), bevorzugt zusätzlich Schneidkante (85), insbesondere für die zuletzt zu montierende Komponente, eine Spanneinrichtung (117) zur endgültigen Positionierung und/oder Sicherung an der Aufnahme (70) vorgesehen ist.

8. Vorrichtung nach Anspruch 6 oder 7,
wobei das Vorhandensein, die korrekte endgültige Positionierung und/oder der korrekte Typ zumindest einer der Komponenten Gegeneinheit (75) und Vorschubeinheit (73), bevorzugt zusätzlich Schneidkante (85), durch eine interne oder externe Steuereinrichtung (39), insbesondere mittels einer Spanneinrichtung (117), automatisch erkennbar ist.

9. Vorrichtung nach einem der Ansprüche 6 bis 8,
wobei eine früher zu montierende Komponente durch eine später zu montierende Komponente endgültig positionierbar und/oder sicherbar ist.

10. Vorrichtung nach einem der vorhergehenden Ansprüche,
wobei die Ausgabeeinrichtung (71) dazu ausgebildet ist, zur Beeinflussung der ausgestoßenen Materialbahn (19) eine Druckluftströmung (87) zu erzeugen.

11. Vorrichtung nach Anspruch 10,
wobei die Druckluftströmung (87) zeitlich und/oder räumlich variierbar ist, und/oder wobei die Druckluftströmung (87) über die Breite der Materialbahn (19) variierbar ist, und/oder wobei die Druckluftströmung (87) jeweils innerhalb eines einem Zwischenblatt (15) entsprechenden Zeitfensters variierbar ist, und/oder wobei die Ausgabeeinrichtung (71) zu einem mehrspurigen Ausstoßen von Materialbahnen (19) ausgebildet und die Druckluftströmung (87) spurindividuell steuerbar ist, und/oder wobei zum Steuern der Druckluftströmung (87) eine Stelleinrichtung (89) vorgesehen ist, wobei bevorzugt die Stelleinrichtung an einem Druckluftauslass der Ausgabeeinrichtung (71) wirksam ist, und/oder wobei die Druckluftströmung (87)in Abhängigkeit von einer jeweiligen Anwendung automatisch, insbesondere über ein jeweils an einer internen oder externen Steuereinrichtung (39) ausgewähltes Programm, oder manuell, insbesondere an einer internen oder externen Bedieneinheit, konfigurierbar ist.

12. Vorrichtung nach Anspruch 10 oder 11,
wobei eine interne oder externe Steuereinrichtung (39) dazu ausgebildet ist, das Ausstoßen der Materialbahn (19) und das Erzeugen der Druckluftströmung (87) zu koordinieren.

13. Vorrichtung nach einem der vorhergehenden Ansprüche,
wobei die Ausgabeeinrichtung (71) zu einem mehrspurigen Ausstoßen von Materialbahnen (19) ausgebildet und für jede Spur (S) der Vorschubspalt von einem Paar (93) aus einer angetriebenen Vorschubwalze (74) und einer Andrückeinheit (76, 98) gebildet ist, und wobei jeweils die Vorschubwalze (74) des einen Paares (93) und die Andrückeinheit (76, 98) eines unmittelbar benachbarten Paares (93) als eine Zweispureinheit (95) gemeinsam um eine gemeinsame Achse (91) drehbar antreibbar und die Andrückeinheiten (76, 98) jeweils mit einer Freilauffunktion versehen sind, insbesondere wobei mehrere Zweispureinheiten (95) nebeneinander vorgesehen sind und jeweils die Andrückeinheit (76, 98) der einen Zweispureinheit (95) und die Vorschubwalze (74) einer unmittelbar benachbarten Zweispureinheit (95) zumindest in radialer Richtung aneinander abgestützt und gegeneinander verdrehbar sind.

14. Vorrichtung zum einspurigen oder mehrspurigen Aufschneiden von Lebensmittelprodukten (11), insbesondere Hochgeschwindigkeitsslicer,
mit einer Produktzufuhr (49), die aufzuschneidende Produkte (11) einspurig oder mehrspurig einem Schneidbereich zuführt, in welchem sich ein Schneidmesser (51) rotierend und/oder umlaufend bewegt, um die zugeführten Produkte (11) in Scheiben (13) zu schneiden, und
mit einer Vorrichtung zum Bereitstellen von bahnförmigem Zwischenblattmaterial nach einem der vorhergehenden Ansprüche.

15. Vorrichtung nach Anspruch 14,
wobei eine gemeinsame Steuereinrichtung (39) vorgesehen ist, die dazu ausgebildet ist, das Aufschneiden der Produkte (11) und das Bereitstellen des Zwischenblattmaterials zu koordinieren.

## Claims

1. An apparatus for a single-track or multitrack provision of web-like interleaved sheet material at a cutting region in which products (11) supplied on one track or on multiple tracks are cut into slices (13) and interleaved sheets (15) are introduced which are cut off from the provided interleaved sheet material in the cutting region,
said apparatus comprising an output device (71) which is configured to eject at least one material web (19) into the cutting region,
wherein the output device (71) comprises at least one driven feed roll (74) and at least one counter-unit (75) which forms a feed gap for the material web (19) together with the feed roll (74), and
wherein the output device (71) is configured to eject material webs (19) on multiple tracks and comprises a driven feed roll (74) for each track (S), wherein the feed rolls (74) of the individual tracks (S) are combined pairwise or group-wise and a coaxial shaft drive (79, 81) is provided for each pair or for each group and comprises a plurality of drive shafts (83) which are disposed coaxially in one another and which are each associated with one of the feed rolls (74).

2. An apparatus in accordance with claim 1,
wherein the feed roll (74) is integrated into a feed unit (73) of the output device (71) and is coupled via a drive belt (78) to a drive motor (A) for the feed roll (74) arranged outside the feed unit (73), with the drive belt (78) being able to be tensioned and released by moving the feed unit (73), in particular by pivoting the feed unit (73).

3. An apparatus in accordance with claim 1 or claim 2,
wherein the output device (71) is controllable by an internal or external control device (39) by an operation of the individual feed rolls (74) individually per track.

4. An apparatus in accordance with any one of the preceding claims,
wherein, for each drive shaft (83), a belt drive comprising a drive motor (A) arranged offset from the drive shaft (83) is provided.

5. An apparatus in accordance with any one of the preceding claims,
wherein two pairs or groups of feed rolls (74) are provided which can be driven from oppositely disposed sides.

6. An apparatus in accordance with any one of the preceding claims,
wherein the output device (71) comprises a stationary mount (70) at which at least the counter-unit (75) and a feed unit (73) can be mounted in a single predefined order, in particular without tools, in particular wherein a cutting edge (85) can additionally be mounted at the mount (70), in particular without tools, with the counter-unit (75), the feed unit (73) and the cutting edge (85) being able to be mounted at the mount (70) in a single predefined order.

7. An apparatus in accordance with claim 6,
wherein a clamping device (117) for the final positioning and/or securing at the mount (70) is provided for at least one of the components counter-unit (75) and feed unit (73), preferably additionally for the cutting edge (85), in particular for the component to be mounted last.

8. An apparatus in accordance with claim 6 or claim 7,
wherein the presence, the correct final positioning and/or the correct type of at least one of the components counter-unit (75) and feed unit (73), preferably additionally of the cutting edge (85), can be automatically recognized by an internal or external control device (39), in particular by means of a clamping device (117).

9. An apparatus in accordance with any one of the claims 6 to 8,
wherein a component to be mounted earlier can be finally positioned and/or secured by a component to be mounted later.

10. An apparatus in accordance with any one of the preceding claims,
wherein the output device (71) is configured to generate a compressed air flow (87) to influence the ejected material web (19).

11. An apparatus in accordance with claim 10,
wherein the compressed air flow (87) is variable in time and/or in space and/or wherein the compressed air flow (87) is variable over the width of the material web (19), and/or wherein the compressed air flow (87) is variable within a respective time window corresponding to an interleaved sheet (15), and/or wherein the output device (71) is configured to eject material webs (19) on multiple tracks and the compressed air flow (87) is controllable individually per track, and/or wherein an adjustment device (89) is provided to control the compressed air flow (87), wherein the adjustment device is preferably active at a compressed air outlet of the output device (71), and/or wherein the compressed air flow (87) can be automatically configured in dependence on a respective application, in particular via a program respectively selected at an internal or external control device (39), or can be manually configured, in particular at an internal or external operating unit.

12. An apparatus in accordance with claim 10 or claim 11,
wherein an internal or external control device (39) is configured to coordinate the ejection of the material web (19) and the generation of the compressed air flow (87).

13. An apparatus in accordance with any one of the preceding claims,
wherein the output device (71) is configured to eject material webs (19) on multiple tracks and the feed gap is formed for each track (S) by a pair (93) comprising a driven feed roll (74) and a pressing unit (76, 98), and wherein the respective feed roll (74) of the one pair (93) and the pressing unit (76, 98) of a directly adjacent pair (93) are together rotatably drivable about a common axis (91) as a two-track unit (95) and the pressing units (76, 98) are each provided with a freewheeling function, in particular wherein a plurality of two-track units (95) are provided next to one another and the respective pressing unit (76, 98) of the one two-track unit (95) and the feed roll (74) of a directly adjacent two-track unit (95) are supported at one another and are rotatable with respect to one another at least in the radial direction.

14. An apparatus for a single-track or multitrack slicing of food products (11), in particular a high-speed slicer,
comprising a product feed (49) which supplies products (11) to be sliced on one track or on multiple tracks to a cutting region in which a cutting blade (51) moves in a rotating and/or revolving manner to cut the supplied products (11) into slices (13); and
an apparatus for the provision of web-like interleaved sheet material in accordance with any one of the preceding claims.

15. An apparatus in accordance with claim 14,
wherein a common control device (39) is provided which is configured to coordinate the slicing of the products (11) and the provision of the interleaved sheet material.

## Revendications

1. Dispositif pour la fourniture en une ou plusieurs voies de matériau de feuille intermédiaire en forme de bande au niveau d'une zone de découpe dans laquelle des produits (11) alimentés en une ou plusieurs voies sont découpés en tranches (13) et des feuilles intermédiaires (15) sont interposées, lesdites feuilles étant séparées du matériau de feuille intermédiaire fourni dans la zone de découpe,
comportant un moyen de distribution (71) qui est réalisé pour éjecter au moins une bande de matériau (19) dans la zone de découpe,
dans lequel
le moyen de distribution (71) comprend au moins un cylindre d'avance (74) entraîné et au moins un ensemble antagoniste (75) qui, conjointement avec le cylindre d'avance (74), forme une emprise d'avance pour la bande de matériau (19), et
le moyen de distribution (71) est réalisé pour éjecter en plusieurs voies des bandes de matériau (19) et comprend un cylindre d'avance (74) entraîné pour chaque voie (S),
les cylindres d'avance (74) des voies individuelles (S) sont réunis par paire ou par groupe, et il est prévu, pour chaque paire ou chaque groupe, un entraînement à arbres coaxiaux (79, 81) pourvu de plusieurs arbres d'entraînement (83) situés coaxialement les uns dans les autres et associés chacun à l'un des cylindres d'avance (74).

2. Dispositif selon la revendication 1,
dans lequel le cylindre d'avance (74) est intégré dans un ensemble d'avance (73) du moyen de distribution (71) et est couplé par une courroie d'entraînement (78) à un moteur d'entraînement (A), disposé à l'extérieur de l'ensemble d'avance (73), pour le cylindre d'avance (74),
la courroie d'entraînement (78) peut être tendue et relâchée par déplacement de l'ensemble d'avance (73), en particulier par pivotement de l'ensemble d'avance (73).

3. Dispositif selon la revendication 1 ou 2,
dans lequel le moyen de distribution (71) peut être commandé par un moyen de commande (39) interne ou externe par l'actionnement des cylindres d'avance individuels (74) individuellement par voie.

4. Dispositif selon l'une des revendications précédentes,
dans lequel est prévu pour chaque arbre d'entraînement (83) un entraînement par courroie avec un moteur d'entraînement (A) disposé de manière décalée par rapport à l'arbre d'entraînement (83).

5. Dispositif selon l'une des revendications précédentes,
dans lequel sont prévus deux paires ou groupes de cylindres d'avance (74) qui peuvent être entraînés de côtés opposés.

6. Dispositif selon l'une des revendications précédentes,
dans lequel le moyen de distribution (71) comprend un logement stationnaire (70) au niveau duquel au moins l'ensemble antagoniste (75) et un ensemble d'avance (73) peuvent être montés dans un seul ordre prédéfini, en particulier sans outils, et
en particulier, une arête de coupe (85) peut en supplément être montée au niveau du logement (70), en particulier sans outils, et
l'ensemble antagoniste (75), l'ensemble d'avance (73) et l'arête de coupe (85) peuvent être montés au niveau du logement (70) dans un seul ordre prédéfini.

7. Dispositif selon la revendication 6,
dans lequel est prévu un moyen de serrage (117) pour le positionnement et/ou le blocage définitif au niveau du logement (70), pour l'un au moins des composants que sont l'ensemble antagoniste (75) et l'ensemble d'avance (73), de préférence en supplément l'arête de coupe (85), en particulier pour le composant monté en dernier.

8. Dispositif selon la revendication 6 ou 7,
dans lequel la présence, le positionnement définitif correct et/ou le type correct de l'un au moins des composants que sont l'ensemble antagoniste (75) et l'ensemble d'avance (73), de préférence en supplément l'arête de coupe (85), peut être détecté(e) automatiquement par un moyen de commande (39) interne ou externe, en particulier à l'aide d'un moyen de serrage (117).

9. Dispositif selon l'une des revendications 6 à 8,
dans lequel un composant à monter plus tôt peut être positionné et/ou bloqué définitivement par un composant à monter plus tard.

10. Dispositif selon l'une des revendications précédentes,
dans lequel le moyen de distribution (71) est réalisé pour générer un flux d'air comprimé (87) pour influencer la bande de matériau éjectée (19).

11. Dispositif selon la revendication 10,
dans lequel le flux d'air comprimé (87) est variable dans le temps et/ou dans l'espace, et/ou le flux d'air comprimé (87) est variable sur la largeur de la bande de matériau (19), et/ou le flux d'air comprimé (87) est variable dans une fenêtre temporelle correspondant à une feuille intermédiaire (15), et/ou le moyen de distribution (71) est réalisé pour éjecter en plusieurs voies des bandes de matériau (19) et le flux d'air comprimé (87) peut être commandé individuellement par voie, et/ou il est prévu un moyen de réglage (89) pour commander le flux d'air comprimé (87), le moyen de réglage agissant de préférence sur une sortie d'air comprimé du moyen de distribution (71), et/ou en fonction d'une application respective, le flux d'air comprimé (87) peut être configuré automatiquement, en particulier à l'aide d'un programme respectif sélectionné sur un moyen de commande (39) interne ou externe, ou manuellement, en particulier sur une unité de contrôle interne ou externe.

12. Dispositif selon la revendication 10 ou 11,
dans lequel un moyen de commande (39) interne ou externe est réalisé pour coordonner l'éjection de la bande de matériau (19) et la génération du flux d'air comprimé (87).

13. Dispositif selon l'une des revendications précédentes,
dans lequel le moyen de distribution (71) est réalisé pour une éjection en plusieurs voies de bandes de matériau (19),
pour chaque voie (S), l'emprise d'avance est formée par une paire (93) constituée d'un cylindre d'avance (74) entraîné et d'un ensemble presseur (76, 98),
le cylindre d'avance (74) respectif d'une paire (93) et l'ensemble presseur (76, 98) respectif d'une autre paire (93) directement voisine peuvent être entraînés conjointement en tant qu'ensemble à deux voies (95) en rotation autour d'un axe commun (91), et les ensembles presseurs (76, 98) sont munis chacun d'une fonction de roue libre, et
en particulier, plusieurs ensembles à deux voies (95) sont prévus les uns à côté des autres, et l'ensemble presseur (76, 98) d'un ensemble à deux voies (95) et le cylindre d'avance (74) d'un autre ensemble à deux voies (95) directement voisin sont appuyés l'un sur l'autre au moins dans la direction radiale et peuvent tourner l'un par rapport à l'autre.

14. Dispositif pour le tranchage en une ou plusieurs voies de produits alimentaires (11), en particulier trancheuse à haute performance,
comportant une alimentation en produits (49) qui amène des produits à trancher (11) en une ou plusieurs voies jusqu'à une zone de découpe dans laquelle une lame de coupe (51) se déplace en rotation et/ou en révolution, afin de découper les produits amenés (11) en tranches (13), et
comprenant un dispositif pour fournir un matériau de feuille intermédiaire en forme de bande selon l'une des revendications précédentes.

15. Dispositif selon la revendication 14,
dans lequel est prévu un moyen de commande commun (39) qui est réalisé pour coordonner le tranchage des produits (11) et la fourniture du matériau de feuille intermédiaire.
